# FASCICULE DE BREVET EUROPEEN

(11) **EP 1 170 254 B1**
(45) Date de publication et mention de la délivrance du brevet: **24.03.2004**
(21) Numéro de dépôt: 01401761.0
(22) Date de dépôt: 02.07.2001
(51) Int. Cl.: C01B 39/02, B01D 53/04, B01J 47/02

(54) **Procédé de préparation de zéolites X et LSX agglomerées et échangées au lithium**
Verfahren zur Herstellung von Lithium ausgetauschten agglomerierten X und LSX-Typ Zeolithen
Process for the preparation of lithium exchanged agglomerated X and LSX-type zeolites

(30) Priorité: 07.07.2000 FR 0008906
(43) Date de publication de la demande: 09.01.2002
(73) Titulaire: CECA S.A., 92800 Puteaux (FR)
(72) Inventeur: Vidal, Jean-Louis, 92150 Suresnes (FR); Sacleux, Jean-Claude, 14600 Honfleur (FR); Masini, Jean-Jacques, 78170 La Celle Saint-Cloud (FR); Plee, Dominque, 64140 Lons (FR)
(74) Mandataire: Treuil, Claude

(56) Documents cités:
- EP-A- 0 863 109
- EP-A- 0 982 269
- FR-A- 2 166 094
- US-A- 5 417 957
- US-A- 5 419 891

## Description

L'invention concerne un procédé de préparation de zéolites agglomérées de type X dont une partie des sites cationiques échangeables est occupée par des ions lithium.

Par zéolite de type X, on entend dans tout ce qui suit les zéolites X de rapport atomique Si/Al ≤ 1,5 et plus particulièrement les zéolites LSX (mis pour Low Silica X) i-e dont le rapport atomique Si/Al est voisin de 1.

Les zéolites X échangées au lithium (c'est-à-dire celles dont au moins une partie des sites cationiques échangeables est occupée par des ions lithium) trouvent de nombreuses applications industrielles et sont largement utilisées pour la séparation de l'azote d'avec d'autres gaz, comme par exemple l'oxygène, l'argon et l'hydrogène selon des techniques d'adsorption sélective des gaz à séparer. Les zéolites mises en oeuvre peuvent se présenter sous diverses formes et la forme exacte qu'elles revêtent peut déterminer leur utilité dans les procédés industriels d'adsorption. Lorsque les zéolites sont utilisées dans des adsorbeurs industriels, il est généralement préféré de les agglomérer (par exemple en les transformant en granulés) pour ne pas risquer, dans une colonne d'adsorption de taille industrielle, un compactage de la zéolite pulvérulente, bloquant ainsi, ou tout au moins réduisant considérablement le flux à travers la colonne.

Selon US 3.140.933, une zéolite de type X ayant des ions de base remplacés par des ions lithium peut être efficacement utilisée pour séparer l'azote de l'oxygène à des températures allant jusqu'à 30°C. Du fait que l'échange d'ions n'est pas total et que les zéolites X ont été synthétisées en milieu sodique, l'adsorbant utilisé est une zéolite mixte sodium/lithium.

US 4.859.217 décrit qu'une très bonne séparation de l'azote d'avec l'oxygène peut être obtenue par adsorption à des températures de 15 à 70 °C en utilisant une zéolite de type X qui possède plus de 88% de ses ions sous forme d'ions lithium, en particulier lorsque est utilisée une zéolite de rapport atomique Si/Al compris entre 1 et 1,25.

US 5.179.979 affirme que les zéolites de type X lithium/métaux alcalino-terreux ayant des rapports molaires lithium/métaux alcalino-terreux de l'ordre de 95/5 à 50/50 environ ont une stabilité thermique supérieure à celle des zéolites au lithium pur correspondantes et de bonnes sélectivités et capacités d'adsorption.

US 5.152.813 décrit l'adsorption d'azote à partir de mélanges gazeux qui utilise des zéolites X cristallines ayant un rapport zéolitique Si/Al ≤ 1,5 et dont les sites échangeables sont occupés par au moins 2 ions : entre 5 et 95% d'ion lithium et entre 5 et 95% d'un second ion choisi parmi calcium, strontium et des mélanges de ceux-ci, le total (lithium et second ion échangeable) étant d'au moins 60%.

US 5.464.467 propose une zéolite de type X dont les cations comprennent, rapportés en équivalents, d'environ 50 à environ 95% de lithium, d'environ 4 à environ 50% d'ions trivalents choisis parmi aluminium, scandium, gallium, fer (III), chrome (III), indium, yttrium, lanthanides seuls, mélanges de deux lanthanides ou plus, et mélanges de ceux-ci, et de 0 à environ 15% d'ions résiduels choisis parmi sodium, potassium, ammonium, hydronium, calcium, strontium, magnésium, baryum, zinc, cuivre (II) et mélanges de ceux-ci qui est préparée par échange des cations échangeables de la zéolite préalablement agglomérée avec un liant, d'abord par du lithium puis par le ou les cations trivalents.

US 5.932.509 propose de préparer ces mêmes zéolites selon un procédé consistant d'abord à échanger les cations échangeables de la zéolite X en poudre par des cations trivalents, puis à agglomérer avec un liant et enfin à procéder à l'échange lithium sur la zéolite agglomérée. Ce procédé nécessite un séchage et une activation intermédiaire de la matière zéolitique. Elle a cependant l'avantage de n'effectuer l'échange final Li que sur un produit pré-calibré en granulométrie, limitant ainsi les pertes en produit fini, coûteux du fait de sa teneur en lithium.

Du fait du coût élevé des sels de lithium, il est primordial d'avoir un procédé d'échange de lithium aussi sélectif que possible pour éviter les pertes de lithium.

EP 863.109 décrit un procédé continu à contre-courant pour échanger les ions d'une zéolite, de préférence sous forme granulaire, caractérisé en ce qu'on fait passer une solution échangeuse d'ions, notamment lithium, dans au moins deux récipients en série, agencés de façon permutable cycliquement et remplis de la zéolite à échanger, la solution échangeuse étant transposée à chaque fois du premier récipient de la série vers le suivant et lorsque le niveau d'échange d'ion souhaité est obtenu , le récipient contenant la zéolite au taux d'échange souhaité est dissocié de la série, la solution échangeuse séparée de la zéolite qui est lavée, isolée et remplacée par un nouvelle charge de zéolite à échanger. Ce procédé permet d'obtenir des zéolites fortement échangées en lithium, c'est-à-dire dont le niveau d'échange en lithium (correspondant au rapport molaire Li/Li+Na des ions Li et Na dans la zéolite) est élevé mais avec un très mauvais rendement en lithium , à savoir 12 % au maximum ; un tel procédé n'est pas transposable industriellement dans la mesure où la solution récupérée en sortie du récipient contenant la zéolite échangée au lithium contient non seulement du lithium mais aussi les ions qui ont été échangés, typiquement sodium et/ou potassium et cette solution est difficilement valorisable industriellement dans la mesure où elle nécessite un traitement lourd de retraitement avant de pouvoir éventuellement être rejetée telle quelle dans l'environnement.

La présente invention propose un procédé de préparation des zéolites X agglomérées dont au moins une partie des sites échangeables est occupée par des ions lithium qui ne présente pas les inconvénients des procédés de l'art antérieur détaillés ci-dessus.

Les zéolites agglomérées préparées selon le procédé objet de l'invention sont des zéolites de type X ayant un rapport atomique Si/Al inférieur ou égal à 1,5 et de préférence compris entre 0,9 et 1,1 dont les cations échangeables comprennent rapportés en équivalents ;
* d'environ 50 à environ 99% d'ions lithium, et de préférence d'au moins 96%,
* d'environ 4 à environ 50% d'ions trivalents choisis parmi l'aluminium, le scandium, le gallium, le fer (III), le chrome (III), l'indium, l'yttrium, les lanthanides ou terres rares, seuls ou en mélange et/ou d'ions divalents choisis parmi le calcium, le strontium, le zinc, le cuivre, le chrome (II), le fer (II), le manganèse, le nickel, le cobalt, seuls ou en mélange,
* 0 à environ 15% d'ions résiduels choisis parmi le sodium, le potassium, l'ammonium, l'hydronium, seuls ou en mélange,
agglomérées avec un liant.

Le procédé selon l'invention fournit non seulement un niveau d'échange de lithium final d'au moins 96 %, mais aussi il se caractérise par un rendement fortement amélioré par rapport à celui de EP863.109, i-e supérieur ou égal à 45 % avec un traitement aisé des effluents contenant du lithium en vue de leur valorisation, voire même dans un mode de réalisation optimisé particulièrement préféré permet d'atteindre un rendement en lithium supérieur ou égal à 80 %,
le niveau d'échange étant défini comme le rapport Li/Li+Na+K où Li, Na et K sont les concentrations respectives en Li, Na et K dans la zéolite obtenue,
et le rendement en lithium comme le rapport de la quantité de lithium fixé sur la zéolite sur la quantité de lithium entrant.

### Agglomération

La première étape du procédé mis au point par la demanderesse consiste en une étape d'agglomération de la zéolite de départ avec un liant inerte. A titre de zéolite de départ, on utilise de façon usuelle des zéolites X en poudre dont les sites échangeables sont majoritairement occupés par des ions sodium et/ou potassium, obtenus classiquement par synthèse.

On peut également utiliser des zéolites dont une partie des cations sodium et/ou potassium a été remplacé par un ou plusieurs cations di- et/ou trivalents tels que le calcium, le strontium, le zinc, le cuivre, le chrome (II), le fer (II), le manganèse, le nickel, le cobalt, l'aluminium, le scandium, le gallium, le fer (III), le chrome (III), l'indium, l'yttrium, les lanthanides ou terres rares.

On procède à l'échange des sites cationiques échangeables de la zéolite par le ou les ions divalents et/ou trivalents sur la zéolite sodium ou sodium+potassium de départ par mise en contact de la zéolite, de préférence sous forme de suspension aqueuse, avec une solution des composés des ions trivalents et/ou des ions divalents en pompant simultanément la suspension de zéolite à échanger et la solution des composés, de préférence dans un mélangeur rapide susceptible d'assurer un mélange homogène de la suspension et de la solution après un faible temps de contact entre la suspension et la solution (quelques minutes), et de manière encore plus avantageuse dans un mélangeur statique susceptible d'assurer un mélange homogène après un très faible temps de contact (quelques secondes), toutes dispositions étant prises pour que les débits soient ajustés de façon à conserver un rapport poids de suspension / poids de solution pratiquement constant. Le recours à l'échange en mélangeur statique n'a pas d'effet quant au taux d'échange, qui reste le taux quantitatif auquel on parvient par échange classique pourvu que le mélange obtenu soit maintenu à maturation pendant environ une heure sous faible agitation. On constate que l'on obtient une meilleure répartition statistique des ions di- et/ou trivalents au sein de la structure zéolitique, ce qui se traduit par un niveau final de capacité d'adsorption d'azote significativement amélioré, ce qui est tout à fait inattendu.

Il est préférable, bien que cela ne soit pas absolument nécessaire, d'utiliser les solutions aqueuses des ions d'échange (di- et/ou trivalents). Tout composé hydrosoluble des ions échangeurs peut être utilisé. Les composés hydrosolubles préférés des ions sont les sels, et en particulier les chlorures, les sulfates et les nitrates. Les sels particulièrement préférés sont les chlorures du fait de leurs solubilités élevées et de leur grande disponibilité.

Lorsqu'on désire préparer une zéolite dont une partie des sites cationiques est occupée par plusieurs types d'ions divalents et/ou trivalents définis plus haut, il est possible de procéder soit simultanément à l'échange de tous les cations, par contact avec une solution contenant tous ces cations, soit par échange successif de chaque cation, soit adopter une solution intermédiaire entre les 2 solutions précédentes.

Une variante préférée consiste à remplacer le ou les cations échangeables de la zéolite simultanément par des ions tri- et/ou divalents et par des ions monovalents, de préférence l'ion sodium.

Une autre variante préférée qui peut être ou non combinée avec la variante préférée exposée ci-dessus, consiste à stabiliser la zéolite à la soude juste après l'échange par les ions tri- et/ou divalents, ou bien après l'échange simultané par des ions tri- et/ou divalents et des ions monovalents.

De manière connue pour l'homme du métier, après chaque étape d'échange ionique, la zéolite est lavée à l'eau, puis séchée à une température en général comprise entre 40 et 200 °C.

Lorsque l'on souhaite obtenir une zéolite agglomérée avec un fort niveau d'échange en lithium, typiquement supérieur ou égal à 96 %, il est préférable de convertir la très grosse majorité voire de tous les cations échangeables de la zéolite de départ ou de la zéolite préalablement agglomérée en une espèce cationique monovalente unique, de préférence la forme ion sodium ou ammonium. Pour cela, la zéolite est mise en contact avec une solution contenant des ions monovalents, tels que sodium ou ammonium, par exemple une solution aqueuse de NaCI (préférée) ou de NH₄Cl, avant ou après l'étape d'agglomération. Les inventeurs ont constaté que cette étape d'échange facilite l'opération d'échange lithium en diminuant l'excès « e » et facilite l'opération de purification.

Il est préférable que le taux d'échange en potassium de la zéolite, avant l'échange lithium, soit inférieur ou égal à 15 % du total des sites échangeables, et avantageusement inférieur ou égal à 10 %.

Pour l'agglomération, on procède dans un premier temps au mélange de ladite zéolite X de départ avec un liant, en général lui-même sous forme de poudre, en présence d'eau puis on transforme le mélange en un agglomérat, par exemple par extrusion ou formation de billes, et on chauffe le mélange zéolite/liant mis en forme à une température de 400-700°C environ pour convertir l'agglomérat « vert » en un agglomérat qui est résistant à l'écrasement. Les liants utilisés pour agglomérer les zéolites incluent les argiles (particulièrement préférées par la demanderesse), les silices, les alumines, les oxydes métalliques et leurs mélanges.

Il est possible de préparer des agglomérats contenant moins de 5 % en poids de liant résiduel. Un procédé d'obtention de ces agglomérats à faible taux de liant consiste à convertir le liant des agglomérats décrits ci-dessus en phase zéolitique. Pour cela, on commence par agglomérer une poudre de zéolite X avec un liant zéolitisable (par exemple kaolin ou métakaolin), puis on zéolitise par macération alcaline par exemple selon le procédé décrit dans EP 932.581. On peut ainsi aisément obtenir selon l'invention des granulés titrant au moins 95% de zéolite remarquablement performants.

En outre, les zéolites peuvent être agglomérées avec des matériaux tels que silice-alumine, silice-magnésie, silice-zircone, silice-thorine, silice-oxyde de béryllium et silice-dioxyde de titane, ainsi qu'avec des compositions ternaires telles que silice-alumine-thorine, silice-alumine-zircone et des argiles présents comme liants.

Les proportions relatives des matériaux constitutifs du liant et des zéolites peuvent varier largement. Le liant d'agglomération représente en général de 5 à 30 parties en poids pour 100 parties d'aggloméré. Les agglomérats ont avantageusement un diamètre d'environ 0,2 à environ 5 mm.

Une variante de l'étape d'agglomération, pour les zéolites dont une partie des sites cationiques échangeables est occupé par des cations di- et/ou trivalents consiste d'abord à agglomérer la zéolite sodium ou sodium + potassium avant de procéder à l'échange d'une partie des ions sodium et éventuellement potassium de la zéolite ainsi agglomérée par des cations di- et/ou trivalents.

### Echange Li

Sur la zéolite agglomérée, on procède ensuite à l'échange d'au moins une partie des cations échangeables de la zéolite par mise(s) en contact de la zéolite agglomérée, mise de préférence en suspension aqueuse, avec une solution de composé de lithium (1), de préférence une solution aqueuse de sel de lithium, tel que LiCI, selon le mode opératoire détaillé ci-dessous :

La zéolite agglomérée à échanger (dont on considère par simplification dans l'exposé qui suit que les cations échangeables sont uniquement Na et K) est répartie dans au moins 2 récipients sous forme de lit fixe, de préférence au moins 3, agencés en série de manière interchangeable, la solution de composés de lithium est acheminée à travers lesdits récipients agencés en série ; la succession des récipients agencés en série, dénommée « carrousel », est modifiée de manière cyclique à des intervalles de temps donnés, l'arrivée de la nouvelle solution étant transposée à chaque fois du 1^{er} récipient où se trouve la zéolite la plus échangée en lithium au récipient qui le suit dans la série ; lorsque le taux d'échange en lithium souhaité est atteint pour la zéolite du 1^{er} récipient, celui-ci est dissocié de la série de récipients du carrousel et la zéolite qui y est contenue est débarrassée de la solution de composés lithium par lavage puis déchargée (4) et éventuellement remplacée par une nouvelle charge de zéolite à échanger.

Le procédé selon l'invention est caractérisé en ce qu'on pratique une purge (5) du flux correspondant à l'excès de lithium mis en oeuvre (dans ce qui suit, par simplification, on considère que la solution de composé de lithium utilisée est une solution aqueuse de LiCI), en la distinguant de l'effluent généré par le carrousel et en ce qu'on extrait du carrousel :
- d'abord le flux (5) correspondant à la percolation « e » en sortie de la colonne de tête du carrousel,
- ensuite le flux (3) correspondant à la percolation « Eo » en sortie de carrousel,
« Eo » étant défini comme l'équivalent stoechiométrique de lithium échangeable du tamis, et « e » l'excès nécessaire pour l'obtention du niveau d'échange visé, qui peut de façon inattendue être supérieur à 96% .

On obtient ainsi deux flux :
- le 1^{er} flux (5) ou purge (en sortie du 1^{er} récipient) est en fait une solution de LiCI contenant un peu de NaCI et KCl,
- le 2^{nd} flux (3) (sortie du carrousel) est riche en NaCl et KCI, et contient des quantités moindres de LiCI, ce qui a pour avantage qu'il peut être rejeté dans le milieu naturel moyennant un traitement simplifié d'épuration du lithium.

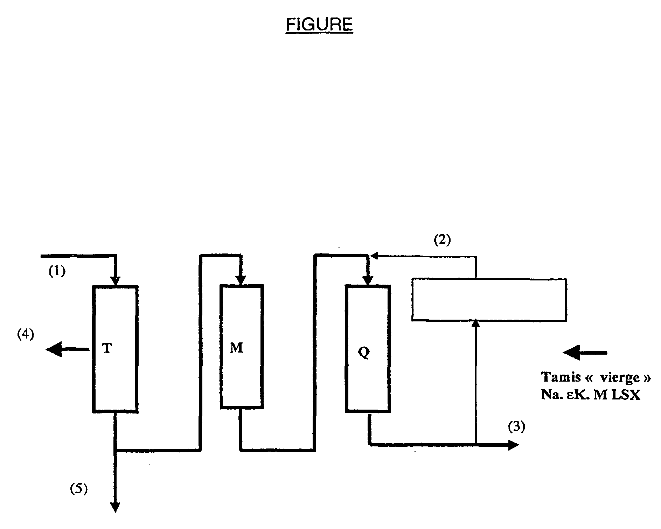

Le schéma représenté à la Figure ci-jointe correspond au procédé selon l'invention tel que décrit ci-dessus.

Le procédé selon l'invention comprend 3 phases :
1- mise en régime initial du carrousel, opération consistant à mettre le système des colonnes à un niveau d'échange Li en percolant une solution de chlorure de lithium (1) sur les colonnes du carrousel remplies de la zéolite de départ tel que le procédé soit en régime dès la mise en place d'une nouvelle charge dans le carrousel,
2- marche en régime normal (le procédé suit le même mode opératoire décrit ci-dessus et conduit à des résultats globalement stables cycle après cycle)
3- fin du cycle

Dans le cas préféré où l'installation fonctionne avec 3 colonnes, l'étape de mise en régime initial peut aussi consister :
- soit à installer en première et deuxième places du train d'échange 2 colonnes pré-échangées issues de la fin de campagne précédente, la position de queue étant occupée par une colonne de billes « vierges » ; dans ce cas, la mise en régime nécessite une consommation de Li plus réduite, sensiblement identique à celle d'un cycle classique en régime normal.
- soit à démarrer avec 3 colonnes de tamis « vierge » mais en remplaçant en partie la solution pure de LiCI par une solution de Li recyclée issue de la fin de campagne précédente.

Les 2 alternatives à l'étape de mise en régime initial détaillées ci-dessus présentent un intérêt économique certain car elles limitent les pertes en lithium.

Dans le cas préféré où l'installation fonctionne avec 3 colonnes, en fin de cycle, 2 alternatives peuvent s'appliquer :
- ou bien, on poursuit le lavage sur le train des 3 colonnes (en récupérant la solution de Li à des fins de recyclage sur des billes « vierges » au début de la campagne suivante) ce qui implique le séchage de 2 charges de billes pré-échangées qui serviront à amorcer la mise en régime de la prochaine campagne,
- ou bien, on poursuit l'échange sur le train des 3 colonnes en récupérant les solutions riches en Li (5) qui sont générées de manière à atteindre un taux d'échange en Li de 96% pour les billes des dernières colonnes du carrousel. Ces solutions serviront avantageusement de solution de mise en régime initial.

De manière préférée, la température de la solution de composés de lithium est comprise entre 80 et 120 °C, et notamment entre 110 et 120 °C, des températures plus élevées peuvent être utilisées, moyennant une mise en pression du système, pression qui se situe de façon avantageuse au-dessus de la pression de vapeur de la solution échangeuse à la température considérée.

La concentration en lithium de la solution, limitée par la solubilité des sels, est choisie aussi élevée que possible afin de réduire les dépenses liées au retraitement. On préfère mettre en oeuvre des solutions de lithium de concentration comprise entre 1 et 10 M et de préférence entre 3 et 6 M.

De manière avantageuse, on ajoute au procédé ci-dessus une étape de purification par cristallisation de la purge LiCl : celle-ci permet l'élimination sélective de la majeure partie du NaCI et des restes de KCI contenus dans la purge, de manière à pouvoir effectuer le recyclage de celle-ci en lieu et place du flux « e » lors de l'opération d'échange suivante. On crée ainsi une boucle d'extraction de sodium et de potassium indépendante.

Il est par ailleurs possible d'améliorer encore le fonctionnement du carrousel par recyclage (avant rejet) de l'effluent final NaCI +KCI + traces LiCI sur le dernier récipient du carrousel alors chargé en zéolite X, ce qui a pour avantage de minimiser encore plus les pertes en lithium et de mettre le carrousel en régime thermique plus rapidement.

Les zéolites préparées sont avantageusement utilisées comme adsorbants de l'azote contenu dans un mélange gazeux, et notamment l'air, et permettent ainsi de séparer l'azote des autres gaz contenus dans le mélange gazeux. La séparation est réalisée en faisant passer le mélange gazeux dans au moins une zone d'adsorption contenant les zéolites ainsi préparées.

Les exemples qui suivent font mieux comprendre l'invention.

### Exemple 1 comparatif

### a. préparation de billes de Na, K, M, LSX de diamètre 1,6-2,5 mm

Dans une cuve équipée d'une hélice d'agitation, on introduit 1.000 litres d'eau industrielle adoucie. Sous agitation (100 trs/min et vitesse périphérique = 3,5 m/s), on ajoute 200 kg de zéolite LSX en poudre (quantité comptée en produit anhydre) de rapport atomique Si/Al égal à 1 et dont les sites cationiques échangeables sont occupés à 77 % par du sodium et à 23 % par du potassium et de volume microporeux égal à 0,262 cm³/g (mesuré par adsorption de toluène à 25°C sous une pression relative de 0,5) et de volume de Dubinin égal à 0,325 cm³/g. On introduit ensuite, en une dizaine de minutes 45 kg de solution de chlorures de terres rares industrielles commercialisée par la société Rhodia sous la dénomination LADI (solution aqueuse contenant des chlorures de lanthane et de praséodyme à des concentrations exprimées en La₂O₃ et Pr₂O₃ de respectivement 16,6 et 7,2 % en poids, le reste étant majoritairement constitué d'eau et de traces de chlorures d'autres terres-rares (Ce, Nd)) On réduit l'agitation à 20 trs/min et on maintient le réacteur dans ces conditions environ une heure, durée au bout de laquelle on constate que le mélange est enfin homogène, après quoi on filtre, lave et sèche la poudre ainsi obtenue.

On procède ensuite à l'agglomération de la poudre à l'aide d'un liant argileux au taux de 17% en poids (comptés par rapport à l'aggloméré total ). On met en forme sous forme de billes de 1,6-2,5 mm de diamètre. Ces billes sont séchées à 80°C, puis activées selon la technologie LTC (mis pour lit traversé) décrite par exemple dans EP 421.875, à 580°C, sous air sec et décarbonaté.

L'analyse des ions de la zéolite aggloméré et échangée, exprimée en pourcentage de la capacité d'échange de la zéolite LSX initiale s'établit ainsi :

| | |
|---|---|
| équivalents terres rares | 14 % |
| équivalents sodium | 69 % |
| équivalents potassium | 17% |

### b. échange lithium selon le procédé de l'invention (taux d'échange Li visé 96%)

b-1. Le carrousel est constitué de 3 colonnes cylindriques T (colonne de tête) M (colonne du milieu) et Q(colonne de queue) de section 0,695 m² et de hauteur de lit 6 m, équipées d'un répartiteur en tête et d'une grille support avec une toile adaptée à la granulométrie des billes en fond de colonne qui sont chacune remplies avec 2700 kg des billes préparées à l'étape a.

La mise en régime initial du carrousel consiste à percoler de haut en bas une solution de chlorure de lithium (1) sur les 3 colonnes du carrousel. La quantité de Li percolé est de l'ordre d'environ 4,7 E₀ (d'abord 1,7 E₀ correspondant à une solution aqueuse de LiCI contenant également environ 7 g/l de Na et 1,5 g/l de K puis 3 E₀ en solution de LiCI pure). Les solutions de LiCI, de concentrations respectives 1M et 4M, sont portées à 115°C avant d'alimenter successivement le train des 3 colonnes. La percolation s'effectue à une vitesse de 15 cm/min.

En fin de percolation, la colonne de tête (T), dont le niveau d'échange en lithium des billes est voisin de 94%, est lavée puis déchargée et remplacée par une nouvelle charge de billes neuves. Ce lit de billes se positionne alors en queue du train d'échange. Dès lors, la marche en régime normal (percolation d'une solution de LiCI de concentration égale à 1,1 E0) commence selon le cycle suivant :
1) Transfert d'une nouvelle charge de 2.700 kg (équivalent anhydre) de billes neuves dans la colonne libre du carrousel qui se positionne de facto en position de queue du carrousel comme indiqué précédemment.
2) Percolation uniquement sur la colonne de queue d'une solution de LiCl recyclée issue du cycle précédent - cette solution contenant de l'ordre de 0,3 E₀ en Li mais riche en Na+K correspond au dernier contenu liquide de la colonne (hold-up) poussé hors du carrousel lors du cycle précédent. Cette étape permet de fixer sur les billes vierges environ 50% du Li présent dans la solution recyclée d'une part, et de préchauffer la nouvelle colonne ce qui permet de favoriser l'échange Li à venir d'autre part (recyclage dit de finition (2))
   L'effluent (2) issu du carrousel lors de cette étape (essentiellement l'eau de mouillage) est dirigé vers la station de traitement des effluents.
3) Percolation sur la colonne de tête de 10 m³ d'une solution pure de LiCI de concentration 1,4 M à 115°C (équivalent à 1,1 E₀ en Li - soit « e » = 0,1 E₀)
   La percolation s'opère sur toute la longueur du train d'échange, à la vitesse de15 cm/min, l'effluent récupéré (10 m³), pauvre en Li (de l'ordre de 0,15 E₀) et riche en Na+K, est également dirigé vers la station de traitement des effluents (3)
   Le choix de la vitesse de percolation est dicté par des conditions de régime d'écoulement : un écoulement-piston étant indispensable pour assurer une avancée méthodique du front dans les colonnes de percolation, une perte de charge minimale est indispensable pour éviter des passages préférentiels trop importants. Compte tenu de la taille des billes mises en oeuvre, la vitesse optimale de percolation a été estimée à 15 cm/min.
   Bien que la concentration en Li soit favorable à l'échange, on a toutefois choisi de diluer la solution de LiCI de manière à augmenter le volume de solution de manière à privilégier le temps de contact dynamique.
4) Lavage de la colonne de tête, la plus échangée du carrousel.
   Cette étape consiste à « pousser » le contenu liquide de la colonne de tête sur toute la longueur du carrousel (c'est en fait une véritable étape de percolation Li) par percolation de 4,5 m³ d'eau de ville à 15 cm/min. La solution récupérée en sortie du train d'échange est récupérée dans une cuve dédiée et sera recyclée au cycle suivant par percolation sur la nouvelle colonne de billes neuves (recyclage de finition (2)).
   Un lavage complémentaire est effectué en percolant 0,5 m³ d'eau de ville sur la colonne de tête exclusivement, de manière à assurer un résiduel en chlorures minimal sur les billes échangées lithium.
5) Déchargement de la colonne de tête et transfert (4) de la charge vers la section de séchage.

Le cycle est alors terminé et une nouvelle charge de billes neuves peut à nouveau intégrer le carrousel.

En résumé, le cycle de fabrication est conforme au schéma de la Figure ci-jointe.

On constate qu'au fil des cycles, le niveau d'échange en lithium de la colonne de tête soutirée diminue et tend vers des valeurs (91-92%) inférieures à celle visée (96 %) :
- 94 % après la mise en régime,
- 93,5% après le premier cycle,
- 92% après le deuxième cycle,
- 91,8% après le troisième cycle.

En régime stable, le niveau d'échange maximal en lithium obtenu est inférieur à 92 % et le rendement en lithium fixé est 87 %.

b-2. On procède à l'échange lithium sur les billes préparées à l'étape a dans le même carrousel que celui décrit en b-1 que l'on fait fonctionner dans les mêmes conditions opératoires sauf pour ce qui concerne la marche en régime normal où la percolation sur la colonne de tête est effectuée avec une solution pure de LiCI de concentration 1,4 M à 115°C (équivalent à 1,3 E₀ en Li - soit "e" = 0,3 E₀ au lieu de 0,1 E₀).

Après la mise en régime, les billes de la colonne de tête du carrousel présentent un taux d'échange en lithium égal à 98%, mais à l'issue les cycles suivants (toujours opérés avec 1,3 E₀) leur taux d'échange en lithium décroît de cycle en cycle pour tendre vers des valeurs comprises entre 92 et 93%, valeurs encore très en deçà de notre objectif de 96% :
- 98% après la mise en régime
- 98% après le premier cycle (effet de la mise en régime poussée)
- 95% après le deuxième cycle
- 94,2% après le troisième cycle
- 93,5% après le quatrième cycle
- 92,5% après le cinquième cycle.

En régime stable, le niveau d'échange maximal en lithium obtenu est voisin de 92,5 % alors que le rendement n'est que de 74 %.

### Exemple 2

On place des billes préparées à l'exemple 1.a dans un carrousel tel que défini à l'exemple 1.b-1 où l'on procède à l'échange lithium selon le procédé défini ci-dessus :
1- mise en régime initial du carrousel, opération consistant à mettre le système des 3 colonnes à un niveau d'échange Li tel que le procédé soit en régime dès la mise en place d'une nouvelle charge dans le carrousel,
2- marche en régime normal (le procédé suit le même mode opératoire que celui décrit à l'exemple 1 et conduit à des résultats globalement stables cycle après cycle)
3- fin du cycle

La mise en régime initial (1-) consiste à percoler une solution de chlorure de lithium (1) sur les 3 colonnes du carrousel remplies de billes ; la quantité de Li percolé étant de l'ordre de 4 E₀, la solution de LiCI, de concentration 4 M, étant portée à 115°C avant d'alimenter le train des 3 colonnes. La percolation se fait à une vitesse de 12 cm/min.

Par rapport aux procédés d'échange lithium de l'exemple 1 b-1 et b-2,
- on travaille avec une solution de LiCI (1) de concentration 4 M, de manière à :
   1- bénéficier d'une force motrice optimale pour l'échange lithium,
   2- diminuer les volumes d'effluents à traiter d'une part, et le volume de la solution à valoriser d'autre part, ce qui présente un avantage important au cas où la solution à valoriser doit être transportée (coûts de transport moindres)
- la vitesse de percolation a été diminuée à 12 cm/min de manière à ne pas réduire de façon trop importante les temps de contact dynamiques (optimum temps de contact/régime d'écoulement, la concentration de la solution étant fixée)

En fin de percolation, la colonne de tête, dont le niveau d'échange en lithium des billes est voisin de 96%, est lavée puis déchargée et remplacée par une nouvelle charge de billes « vierges ». Ce lit de billes se positionne alors en queue du train d'échange. Dès lors, la marche en régime normal commence.

La marche en régime normal selon 2-) suit le cycle suivant :
1) Transfert d'une nouvelle charge de 2.700 kg (équivalent anhydre) de billes neuves dans la colonne libre du carrousel qui se positionne de facto en position de queue du carrousel.
2) Percolation sur la colonne de queue uniquement d'une solution de LiCl recyclée issue du cycle précédent - cette solution contenant de l'ordre de 0,3 E₀ en Li mais riche en Na+K correspond au dernier contenu liquide de la colonne poussé hors du carrousel lors du cycle précédent.
   Cette étape permet de fixer sur le tamis vierge environ 50 % du lithium présent dans la solution recyclée d'une part, et de pré-chauffer la nouvelle colonne ce qui permet de favoriser l'échange lithium d'autre part (recyclage de finition (2))
   L'effluent issu du carrousel lors de cette étape (essentiellement l'eau de mouillage) est dirigé vers la station de traitement des effluents.
3) Percolation sur la colonne de tête de 6,6 m³ d'une solution pure de LiCl, 4M, à 115°C (équivalent à 2,2 E₀ en Li - soit "e" = 1,2 E₀) :
   - dans un 1^{er} temps, on procède à l'extraction au pied de la colonne de tête de 4,5 m³ (environ le contenu liquide de la colonne) d'une solution aqueuse (5) riche en Li (de l'ordre de 1,05 E₀) et pauvre en Na+K. Cette solution (5), aisément valorisable, présente les caractéristiques moyennes suivantes :
      - concentration en Li entre 19 et 20 g/l
      - rapport molaire Li/Na compris entre 6 et 8
      - rapport molaire Li/K compris entre 50 et 60
   - dans un 2^{ème} temps, la percolation s'opère sur toute la longueur du train d'échange, à la même vitesse de 12 cm/min, l'effluent (3) récupéré (2,1 m³) pauvre en Li (de l'ordre de 0,15 E₀ correspondant au résultat de la percolation de recyclage effectuée sur la colonne vierge en début de cycle) et riche en Na+K est dirigé vers la station de traitement des effluents.
4) Lavage de la colonne de tête, échangée, à ce stade du cycle, à hauteur de 96% en Li.
   Cette étape consiste à déplacer le contenu liquide de la colonne de tête (ou hold-up) sur toute la longueur du carrousel (qui correspond à une véritable étape de percolation Li) par percolation de 4,5 m³ d'eau de ville à 12 cm/min. La solution récupérée en sortie du train d'échange est stockée dans une cuve dédiée et sera recyclée au cycle suivant par percolation sur la nouvelle colonne de tamis « vierge » (recyclage de finition (2))
   Un lavage complémentaire est effectué en percolant 0,5 m³ d'eau de ville sur la colonne de tête exclusivement, de manière à assurer un taux de chlorures résiduels minimal sur l'adsorbant.
5) Déchargement de la charge de la colonne de tête (4) et transfert vers la section de séchage.

Le cycle est alors terminé et une nouvelle charge de billes vierges peut à nouveau intégrer le carrousel.

En résumé, le cycle de fabrication suit le schéma de la Figure ci-jointe.

En régime stable, le niveau d'échange maximal en lithium obtenu est de 96 % et le rendement est de 45 % mais le flux en sortie de carrousel est aisément valorisable.

### Exemple 3

Avant d'être agglomérée selon le procédé détaillé à l'exemple 1.a, la zéolite NaK LSX de l'exemple 1.a est soumise à un échange simultané d'ions terres-rares et d'ions sodium de manière à limiter le taux des sites cationiques de la zéolite occupés par des ions potassium à au plus 10% (taux d'échange rapporté à la somme Na + K) par mise en suspension de la zéolite NaK LSX dans de l'eau avec une solution aqueuse de sels de terres-rares et de Na. On obtient une zéolite agglomérée dont le taux de Na représente au moins 90 % du taux de Na + K de la zéolite de départ et dont le taux d'échange en cations trivalents de terres-rares est égal à environ 14 %.

Les billes ainsi préparées sont placées dans un carrousel tel que défini à l'exemple 1.b-1 où l'on procède à l'échange lithium de la zéolite desdites billes selon le procédé défini à l'exemple 2.

La percolation Li est réalisée suivant le procédé décrit dans l'exemple 2 avec les modifications ci-dessous :
- Lors de la mise en régime initial, la quantité de Li percolé est de l'ordre de 4 E₀. La solution de LiCI, de concentration 5 M, est portée à 115°C avant d'alimenter le train des 3 colonnes et la percolation se fait à une vitesse de 12 cm/min.

En mettant en oeuvre une solution de LiCI de concentration 5 M et des billes dont la teneur en K est inférieure à celle des billes de l'exemple 1.a, on abaisse la limite de précipitation de la solution LiCl - NaCl - KCI dans les colonnes du carrousel.

L'augmentation de la concentration LiCI à 5 M permet, comme pour le procédé de l'exemple 2, de :
1- bénéficier d'une force motrice optimale pour l'échange Li
2- diminuer les volumes d'effluents à traiter d'une part, le volume de solution à valoriser d'autre part.

La vitesse de percolation est maintenue à 12 cm/min de manière à ne pas diminuer encore les temps de contact dynamiques. Elle sera avantageusement diminuée dans le cas d'une charge de billes de plus faible diamètre.

En fin de percolation, la colonne de tête échangée à plus de 96% en Li, est lavée puis déchargée et remplacée par une nouvelle charge de tamis « vierge ». Ce lit de billes se positionne alors en queue du train d'échange. Dès lors, la marche en régime normal commence selon le cycle suivant :
1) Transfert d'une nouvelle charge de 2.700 kg (équivalent anhydre) de billes neuves de Na, εK, M, LSX dans la colonne libre du carrousel qui se positionne de facto en position de queue du carrousel.
2) Percolation sur la colonne de queue uniquement d'une solution de LiCl recyclée issue du cycle précédent - cette solution contenant de l'ordre de 0,3 E₀ en Li mais riche en Na correspond au dernier contenu liquide de la colonne poussé hors du carrousel lors du cycle précédent.
   Cette étape permet de fixer sur les billes vierges environ 50% du Li présent dans la solution recyclée d'une part, et de pré-chauffer la nouvelle colonne ce qui permet de favoriser l'échange Li d'autre part (recyclage de finition (2))
   L'effluent issu du carrousel lors de cette étape (essentiellement l'eau de mouillage) est dirigé vers la station de traitement des effluents (3)
3) Percolation sur la colonne de tête de 5,3 m³ d'une solution pure de LiCI de concentration 5 M, à 115°C (équivalent à 2,2 E₀ en Li ― soit "e" = 1,2 E₀ ) :
   - dans un 1^{er} temps, on procède à l'extraction au pied de la colonne de tête de 3,6 m³ (environ le contenu liquide de la colonne) d'une solution riche en Li (de l'ordre de 1,05 E₀) et pauvre en Na+ εK. Cette solution, valorisable, présente les caractéristiques moyennes suivantes :
      - concentration en Li entre 23 et 25 g/l
      - rapport molaire Li/Na voisin de 4,5
      - rapport molaire Li/K voisin de 160
   - dans un 2^{ème} temps, la percolation s'opère sur toute la longueur du train d'échange, à la même vitesse de 12 cm/min, l'effluent récupéré (1,7 m³) pauvre en Li (de l'ordre de 0,15 E₀ - c'est le résultat de la percolation de recyclage effectuée sur la colonne vierge en début de cycle) et riche en Na est dirigé vers la station de traitement des effluents (3)
4) Lavage de la colonne de tête, échangée, à ce stade du cycle, à hauteur de 96% en Li.
   Cette étape consiste à déplacer le contenu liquide de la colonne de tête sur toute la longueur du carrousel (ce qui correspond en fait à une véritable étape de percolation Li) par percolation de 4,5 m³ d'eau de ville à 12 cm/min. La solution récupérée en sortie du train d'échange est récupéré dans une cuve dédiée et sera recyclée au cycle suivant par percolation sur la nouvelle colonne de billes « vierge » (recyclage de finition (2))
   Un lavage complémentaire est effectué en percolant 0,5 m³ d'eau de ville sur la colonne de tête exclusivement, de manière à assurer un résiduel en chlorures minimal sur le tamis.
5) Déchargement de la colonne de tête et transfert de la charge vers la section de séchage.

Le cycle est alors terminé et une nouvelle charge de billes vierges peut à nouveau intégrer le carrousel.

Là encore, en fin de cycle, 2 alternatives peuvent s'appliquer :
- ou bien, on poursuit le lavage sur le train des 3 colonnes (en récupérant la solution de Li à des fins de recyclage sur billes « vierges » au début de la campagne suivante) ce qui implique le séchage de 2 charges de billes pré-échangées qui serviront à amorcer la mise en régime de la prochaine campagne,
- ou bien, on poursuit l'échange sur le train des 3 colonnes en récupérant les solutions riches en Li qui sont générées pour atteindre un taux d'échange en Li de 96% pour les zéolites des billes garnissant les dernières colonnes du carrousel . Ces solutions serviront de solution de mise en régime de la prochaine campagne.

En résumé, le cycle de fabrication suit le schéma de la Figure ci-jointe.

Ce procédé assure :
- d'une part, un niveau d'échange Li supérieur à 96%, en moyenne légèrement supérieur au niveau d'échange Li obtenu dans l'exemple 2, amélioration due au gain d'échangeabilité Li sur une base Na-εK LSX par rapport à une base Na-K LSX
- d'autre part, une valorisation accrue de la solution de Li recueillie en pied de colonne de tête, de par la faible teneur en K, ce qui permet d'envisager un procédé intégré dans lequel cette solution serait entièrement recyclée après abattement du Na dans une unité annexe de cristallisation sélective.

### Exemple 4

A partir de billes agglomérées selon le mode opératoire décrit à l'exemple 1.a, on procède à l'échange lithium selon le procédé de l'exemple 3 auquel on apporte les modifications ci-dessous :
- Traitement de la phase extraite de la colonne de tête (purge) au cycle n-1 (3,6 m³) avec :
   - Concentration en Li - 23/25 g/l
   - rapport molaire Li/Na voisin de 4,5
   - rapport molaire Li/K voisin de 160
   selon les étapes suivantes :
   1. Concentration sous vide à une température voisine de 70° C, compatible avec l'obtention d'un concentrat de teneur en LiCI d'environ 400 g/l.
   2. Refroidissement à 25° C environ, par un dispositif d'échange thermique adapté, du flux riche en cristaux de NaCI issu de l'étape 1.
   3. Filtration selon les règles de l'art du flux riche en LiCI issu de l'étape 2 de manière à minimiser les pertes en solution de chlorure de lithium.
   4. Dilution à l'eau pour ramener la teneur en lithium à la concentration correspondant à 5 M (en LiCl)

On obtient ainsi environ 2.400 I d'une solution de LiCI de concentration 5 M et contenant moins de 2 g/l de NaCI et moins de 3 g/l de KCI.
- Percolation au cycle n
   - des 2,4 m³ de solution LiCI 5 M issus du traitement décrit ci-dessus,
   - puis d'un complément de 2,9 m³ de solution de LiCI 5 M pure.

Le cycle de fabrication suit alors le schéma décrit à l'exemple 2, avec un rendement Li, tel que défini dans les exemples 1 à 3, supérieur à 85 % compte tenu des pertes inhérentes au procédé de concentration/purification de la purge lithium décrit précédemment.

### Exemple 5

Avant d'être agglomérée selon le procédé détaillé à l'exemple 1.a, la zéolite NaK LSX de l'exemple 1.a est soumise à un échange d'ions sodium de manière à limiter le taux des sites cationiques de la zéolite occupés par des ions potassium à 8% (taux d'échange rapporté à la somme Na + K) par mise en suspension de la zéolite NaK LSX dans de l'eau avec une solution aqueuse de sels de Na. On obtient une zéolite agglomérée dont le taux de Na représente 92 % du taux de Na + K de la zéolite de départ.

L'échange lithium qui suit est réalisé, d'une part sur les billes ainsi préparées, d'autre part avec des billes de zéolite NaK LSX n'ayant pas été soumises à un échange d'ions sodium.

Les billes sont placées dans un carrousel tel que défini à l'exemple 1.b-1 où l'on procède à l'échange lithium de la zéolite desdites billes selon le procédé défini à l'exemple 3.

En fin de percolation de mise en régime (avec l'équivalent de 4 E₀ en Li), la colonne de tête échangée à plus de 96% en Li, est lavée puis déchargée et remplacée par une nouvelle charge de tamis « vierge ». Ce lit de billes se positionne alors en queue du train d'échange. Dès lors, la marche en régime normal commence selon le cycle suivant :
1) Transfert d'une nouvelle charge de 2.700 kg (équivalent anhydre) de billes neuves de Na, εK, LSX dans la colonne libre du carrousel qui se positionne de facto en position de queue du carrousel.
2) Percolation sur la colonne de queue uniquement d'une solution de LiCl recyclée issue du cycle précédent - cette solution contenant de l'ordre de 0,3 E₀ en Li mais riche en Na correspond au dernier hold-up de colonne poussé hors du carrousel lors du cycle précédent.
   Cette étape permet non seulement de fixer sur les billes vierges environ 50 % du Li présent dans la solution recyclée mais aussi d'abaisser significativement la teneur résiduelle en potassium de la zéolite de départ. D'autre part, elle permet de préchauffer la nouvelle colonne ce qui favorise l'échange Li (recyclage de finition (2))
   L'effluent issu du carrousel lors de cette étape (essentiellement l'eau de mouillage mais aussi un flux riche en sodium et potassium) est dirigé vers la station de traitement des effluents (3)
3) Percolation sur la colonne de tête de 6,6 m³ d'une solution pure de LiCI de concentration 5 M, à 115°C (équivalent à 2,2 E₀ en Li - soit "e" = 1,2 E₀ ) :
   - dans un 1^{er} temps, on procède à l'extraction au pied de la colonne de tête de 4,2 m³ (environ le hold-up de la colonne) d'une solution riche en Li (de l'ordre de 1,05 E₀) et pauvre en Na+εK. Cette solution, valorisable, présente les caractéristiques moyennes suivantes :
      - concentration en Li entre 23 et 25 g/l
      - rapport molaire Li/Na voisin de 5,5
      - rapport molaire Li/K d'au moins 200
      - dans un 2^{ème} temps, la percolation s'opère sur toute la longueur du train d'échange, à la même vitesse de 12 cm/min, l'effluent récupéré (2,4 m³) pauvre en Li (de l'ordre de 0,15 E₀ - c'est le résultat de la percolation de recyclage effectuée sur la colonne vierge en début de cycle) et riche en Na est dirigé vers la station de traitement des effluents (3)
4) Lavage de la colonne de tête, échangée, à ce stade du cycle, à hauteur de 96% en Li.
   Cette étape consiste à déplacer le hold-up de la colonne de tête sur toute la longueur du carrousel (ce qui correspond en fait à une véritable étape de percolation Li) par percolation de 4,5 m³ d'eau de ville à 12 cm/min. La solution obtenue en sortie du train d'échange est récupérée dans une cuve dédiée et sera recyclée au cycle suivant par percolation sur la nouvelle colonne de billes « vierge» (recyclage de finition (2))
   Un lavage complémentaire est effectué en percolant 0,5 m³ d'eau de ville sur la colonne de tête exclusivement, de manière à assurer un résiduel en chlorures minimal sur le tamis.
5) Déchargement de la colonne de tête et transfert de la charge vers la section de séchage.

Le cycle est alors terminé et une nouvelle charge de billes vierges peut à nouveau intégrer le carrousel.

Au bout de 8 cycles, on substitue la colonne vierge avec des billes de zéolite Na K LSX, n'ayant pas subi le pré-échange sodium.

Le résultat inattendu est que le passage des billes Na εK LSX (billes NaK LSX pré-échangées sodium) à des billes NaK LSX (billes n'ayant pas été pré-échangées sodium) n'a pas modifié la qualité du flux de 4,2 m³ extrait de la colonne de tête, et notamment la teneur en potassium qui reste inférieure à 0.5 g/l malgré la teneur en potassium significativement élevée de la zéolite de départ.

Le pré-échange sodium (dans le cas où il n'est pas pratiqué en co-échange avec des ions di- et/ou trivalents) systématique n'est donc pas nécessaire pour obtenir des teneurs en K inférieures à 1 g/l dans ce flux. Il suffit d'amorcer les cycles de percolation avec des billes pré-échangées sodium. L'étape de recyclage de finition se fait alors avec un flux à ratios Li/Na et Na/K favorables pour une extraction sélective du potassium contenu dans la zéolite de la colonne de queue. Le résultat final (teneur en K de la purge) est ainsi comparable à celui obtenu avec une zéolite pré-échangée sodium.

Lorsqu'on traite la phase extraite de la colonne de tête (purge) au cycle n-1 (4,2 m³) avec :
- concentration en Li ~ 24 g/l
- rapport molaire Li/Na voisin de 5.5
- rapport molaire Li/K supérieur à 200
selon les étapes de cristallisation sélective décrites dans l'exemple 4, on obtient environ 2.600 I d'une solution de LiCI de concentration 5 M et contenant moins de 2 g/l de NaCI et moins de 2 g/l de KCI.

Ce flux traité de 2,6 m3 de solution LiCI 5M est percolé au cycle n avant d'être complété par la percolation de 4 m³ de solution de LiCI 5 M pure.

Le cycle de fabrication suit alors le schéma décrit à l'exemple 2, avec un rendement Li supérieur à 85 % compte tenu des pertes inhérentes au procédé de concentration/purification de la purge lithium décrit précédemment.

## Revendications

1. Procédé de préparation de zéolites de type X ayant un rapport atomique Si/Al inférieur ou égal à 1,5 et de préférence compris entre 0,9 et 1,1 dont les cations échangeables comprennent rapportés en équivalents ;
* d'environ 50 à environ 99% d'ions lithium, et de préférence d'au moins 96%,
* d'environ 4 à environ 50% d'ions trivalents choisis parmi l'aluminium, le scandium, le gallium, le fer (III), le chrome (III), l'indium, l'yttrium, les lanthanides ou terres rares, seuls ou en mélange et/ou d'ions divalents choisis parmi le calcium, le strontium, le zinc, le cuivre, le chrome (II), le fer (II), le manganèse, le nickel, le cobalt, seuls ou en mélange,
* 0 à environ 15% d'ions résiduels choisis parmi le sodium, le potassium, l'ammonium, l'hydronium, seuls ou en mélange,
agglomérées avec un liant,
selon lequel on procède à l'échange lithium d'une partie des cations échangeables d'une zéolite de type X dont les cations échangeables sont des cations sodium, potassium, ammonium, hydronium et/ou des cations di- et/ou trivalents et agglomérée,
par mise(s) en contact de ladite zéolite répartie dans au moins 2 récipients sous forme de lit fixe, de préférence au moins 3, agencés en série de manière interchangeable, avec une solution de composés de lithium (1) acheminée à travers lesdits récipients agencés en série (ou carrousel) et dont la succession est modifiée de manière cyclique à des intervalles de temps donnés, l'arrivée de la nouvelle solution étant transposée à chaque fois du 1^{er} récipient où se trouve la zéolite la plus échangée en lithium au récipient qui le suit dans la série ; lorsque le taux d'échange en lithium souhaité est atteint pour la zéolite du 1^{er} récipient, celui-ci est dissocié de la série de récipients du carrousel et la zéolite qui y est contenue est débarrassée de la solution de composés lithium par lavage puis déchargée (4) et éventuellement remplacée par une nouvelle charge de zéolite à échanger
et **caractérisé en ce qu'**on pratique une purge (5) du flux correspondant à l'excès de lithium mis en oeuvre en la distinguant de l'effluent généré par le carrousel et **en ce qu'**on extrait du carrousel :
- d'abord le flux (5) correspondant à la percolation « e » en sortie de la colonne de tête du carrousel,
- ensuite le flux (3) correspondant à la percolation « Eo » en sortie de carrousel,
« Eo » étant défini comme l'équivalent stoechiométrique de lithium échangeable du tamis, et « e » l'excès nécessaire pour l'obtention du niveau d'échange en lithium visé, de préférence supérieur à 96% .

2. Procédé selon la revendication 1, **caractérisé en ce que** la température de la solution de composés de lithium est soit comprise entre 80 et 120 °C, et de préférence entre 110 et 120 °C, soit supérieure à 120 °C avec mise en pression du système, pression de préférence au-dessus de la pression de vapeur de la solution échangeuse à la température considérée.

3. Procédé selon la revendication 1 ou 2, **caractérisé en ce que** la concentration de la solution de composés de lithium est comprise entre 1 et 10 M et de préférence entre 3 et 6 M.

4. Procédé selon l'une quelconque des revendications 1 à 3, **caractérisé en ce que** le taux d'échange en potassium de la zéolite, avant l'échange lithium, est inférieur ou égal à 15 % du total des sites échangeables, et avantageusement inférieur ou égal à 10 %.

5. Procédé selon l'une quelconque des revendications 1 à 4, **caractérisé en ce qu'**il comprend, avant I échange lithium, une étape de conversion de la très grosse majorité voire de tous les cations échangeables de la zéolite de départ en une espèce cationique monovalente unique, de préférence la forme ion sodium ou ammonium avant et/ou après l'étape d'agglomération de la zéolite.

6. Procédé selon l'une quelconque des revendications 1 à 5, **caractérisé en ce qu'**il comprend une étape de purification par cristallisation de la purge LiCl.

7. Procédé selon l'une quelconque des revendications 1 à 6, **caractérisé en ce que** l'effluent final NaCI +KCI + traces LiCI est recyclé sur le dernier récipient du carrousel.

8. Procédé selon l'une quelconque des revendications 1 à 7 dans lequel la zéolite de départ est répartie dans 3 lits fixes, **caractérisé en ce que** l'étape de mise en régime initial consiste à mettre le système des colonnes à un niveau d'échange Li en percolant une solution de chlorure de lithium (1) sur les colonnes du carrousel remplies de la zéolite de départ, et de préférence
- soit à installer en première et deuxième places du train d'échange 2 colonnes pré-échangées issues de la fin de campagne précédente, la position de queue étant occupée par une colonne de billes « vierges »,
- soit à démarrer avec 3 colonnes de tamis « vierge » mais en remplaçant en partie la solution pure de LiCI par une solution de Li recyclée issue de la fin de campagne précédente.

9. Procédé selon la revendication 8, **caractérisé en ce qu'**en fin de cycle,
- soit on poursuit le lavage sur le train des 3 colonnes (en récupérant la solution de Li à des fins de recyclage sur des billes « vierges » au début de la campagne suivante) et on procède au séchage de 2 charges de billes pré-échangées servant à amorcer la mise en régime de la prochaine campagne,
- soit on poursuit l'échange sur le train des 3 colonnes en récupérant les solutions riches en Li (5) qui sont générées de manière à atteindre un taux d'échange en Li de 96% pour les billes des dernières colonnes du carrousel et avantageusemement utilisées comme solution de mise en régime initial.

## Claims

1. Process for the preparation of zeolites of X type having an Si/Al atomic ratio of less than or equal to 1.5 and preferably of between 0.9 and 1.1, the exchangeable cations of which comprise, referred to as equivalents;
* from approximately 50 to approximately 99% of lithium ions and preferably at least 96%,
* from approximately 4 to approximately 50% of trivalent ions chosen from aluminium, scandium, gallium, iron(III), chromium(III), indium, yttrium, lanthanides or rare earth metals, alone or as mixtures, and/or of divalent ions chosen from calcium, strontium, zinc, copper, chromium(II), iron(II), manganese, nickel or cobalt, alone or as a mixture,
* 0 to approximately 15% of residual ions chosen from sodium, potassium, ammonium or hydronium, alone or as a mixture,
agglomerated with a binder,
according to which a portion of the exchangeable cations of an agglomerated zeolite of X type, the exchangeable cations of which are sodium, potassium, ammonium and/or hydronium cations and/or di- and/or trivalent cations, is exchanged with lithium,
by bringing the said zeolite, distributed in at least 2, preferably at least 3, receptacles in the stationary bed form which are arranged in series in an interchangeable manner, into contact with a solution of lithium compounds (1) conveyed through the said receptacles arranged in series (or carrousel), the sequence of which is modified cyclically at given time intervals, the inlet of the fresh solution being moved on each occasion from the 1 st receptacle, in which is found the zeolite which has been exchanged with lithium to the greatest extent, to the following receptacle in the series; when the desired degree of exchange with regard to lithium is reached for the zeolite in the 1st receptacle, the latter is taken out of the series of receptacles of the carrousel and the zeolite which is present therein is freed from the solution of lithium compounds by washing, then discharged (4) and optionally replaced by a fresh charge of zeolite to be exchanged, and **characterized in that** a bleed (5) is drawn off from the stream corresponding to the excess of lithium employed, it being set apart from the effluent generated by the carrousel, and **in that** the following are extracted from the carrousel:
- first the stream (5) corresponding to the percolation "e" at the outlet of the head column of the carrousel,
- subsequently the stream (3) corresponding to the percolation "E₀" at the carrousel outlet,
"E₀" being defined as the stoichiometric equivalent of exchangeable lithium of the sieve and "e" the excess necessary in order to obtain the targeted level of exchange with regard to lithium, preferably greater than 96%.

2. Process according to Claim 1, **characterized in that** the temperature of the solution of lithium compounds is either between 80 and 120°C and preferably between 110 and 120°C, or greater than 120°C with pressurization of the system at a pressure preferably above the vapour pressure of the exchanging solution at the temperature under consideration.

3. Process according to Claim 1 or 2, **characterized in that** the concentration of the solution of lithium compounds is between 1 and 10M and preferably between 3 and 6M.

4. Process according to any one of Claims 1 to 3, **characterized in that** the degree of exchange with regard to potassium of the zeolite, before the lithium exchange, is less than or equal to 15% of the total of the exchangeable sites and advantageously less than or equal to 10%.

5. Process according to any one of Claims 1 to 4, **characterized in that** it comprises, before the lithium exchange, a stage of conversion of a very large majority, indeed even all, of the exchangeable cations of the starting zeolite to a single monovalent cationic species, preferably the sodium or ammonium ion form, before and/or after the stage of agglomeration of the zeolite.

6. Process according to any one of Claims 1 to 5, **characterized in that** it comprises a stage of purification by crystallization of the LiCl bleed.

7. Process according to any one of Claims 1 to 6, **characterized in that** the final effluent NaCl+KCl+traces of LiCl is recycled over the final receptacle of the carrousel.

8. Process according to any one of Claims 1 to 7 in which the starting zeolite is distributed in 3 stationary beds, **characterized in that** the initial startup stage consists in placing the system of the columns at a level of Li exchange by percolating a solution of lithium chloride (1) over the columns of the carrousel which are filled with the starting zeolite and preferably
- either in installing, in the first and second places of the exchange line, 2 pre-exchanged columns resulting from the end of the preceding campaign, the tail position being occupied by a column of "virgin" beads;
- or in starting with 3 columns of "virgin" sieve but partially replacing the pure solution of LiCl with a recycled solution of Li resulting from the end of the preceding campaign.

9. Process according to Claim 8, **characterized in that**, at the end of the cycle,
- either the washing is continued over the line of the 3 columns (the Li solution being recovered for the purposes of recycling over "virgin" beads at the beginning of the following campaign) and 2 charges of pre-exchanged beads, which are used to initiate the startup of the following campaign, are dried,
- or the exchange is continued over the line of 3 columns with recovery of the solutions rich in Li (5) which are generated, so as to achieve a degree of exchange with regard to Li of 96% for the beads in the final columns of the carrousel, and which are advanageously used as initial startup solution.

## Patentansprüche

1. Verfahren zur Herstellung von Zeolithen vom Typ X mit einem Si/Al-Atomverhältnis kleiner gleich 1,5 und vorzugsweise zwischen 0,9 und 1,1, die als austauschbare Kationen auf Äquivalentbasis
* ungefähr 50 bis ungefähr 99% und vorzugsweise mindestens 96% Lithiumionen,
* etwa 4 bis etwa 50% unter Aluminium, Scandium, Gallium, Eisen(III), Chrom(III), Indium, Yttrium und den Lanthaniden bzw. Seltenerdmetallen allein oder im Gemisch ausgewählte dreiwertige Ionen und/oder unter Calcium, Strontium, Zink, Kupfer, Chrom(II), Eisen(II), Mangan, Nickel und Cobalt allein oder im Gemisch ausgewählte zweiwertige Ionen und
* 0 bis etwa 15% unter Natrium, Kalium, Ammonium und Hydronium allein oder im Gemisch ausgewählte restliche Ionen
enthalten und mit einem Bindemittel agglomeriert sind,
bei dem man einen Teil der austauschbaren Kationen eines Zeoliths vom Typ X, der als austauschbare Kationen Natriumkationen, Kaliumkationen, Ammoniumkationen, Hydroniumkationen und/oder zweiund/oder dreiwertige Kationen enthält und agglomeriert ist, gegen Lithium austauscht,
indem der auf mindestens 2 und vorzugsweise 3 austauschbar in Reihe geschaltete Behälter in Festbettform verteilte Zeolith mit einer Lösung von Lithiumverbindungen (1), die durch die in Reihe (oder Karusselform) geschalteten Behälter geleitet wird, in Kontakt gebracht wird und die Reihenfolge der in Reihe geschalteten in gegebenen Zeitintervallen zyklisch verändert wird, wobei der Zulauf der frischen Lösung jeweils von dem ersten Behälter, in dem sich der am stärksten lithiumausgetauschte Zeolith befindet, auf den in der Reihe folgenden Behälter umgestellt wird, beim Erreichen des gewünschten Lithiumaustauschgrads für den Zeolith im ersten Behälter dieser von der Behälterreihe des Karussels abgekoppelt wird und der darin enthaltende Zeolith durch Waschen von der Lösung von Lithiumverbindungen befreit, dann ausgetragen (4) und gegebenenfalls durch eine neue Charge von auszutauschendem Zeolith ersetzt wird,
und **dadurch gekennzeichnet, daß** man einen dem eingesetzten Überschuß an Lithium entsprechenden Teilstrom entnimmt (5) und von dem Austragsstrom des Karussels getrennt hält und aus dem Karussel:
- zuerst den Strom (5), der der Perkolation "e" am Ausgang der vorderen Säule des Karussels entspricht,
- und dann den Strom (3), der der Perkolation "Eo" am Ausgang des Karussels entspricht,
abzieht,
wobei "Eo" als das stöchiometrische Äquivalent an austauschbarem Lithium des Siebs und "e" als der zur Erzielung des vorgesehenen Lithiumaustauschgrads, vorzugsweise mehr als 96%, definiert ist.

2. Verfahren nach Anspruch 1, **dadurch gekennzeichnet, daß** die Temperatur der Lösung von Lithiumverbindungen entweder zwischen 80 und 120°C und vorzugsweise zwischen 110 und 120°C oder über 120°C mit Druckbeaufschlagung des Systems, vorzugsweise auf einen über dem Dampfdruck der Austauschlösung bei der betrachteten Temperatur liegenden Druck, liegt.

3. Verfahren nach Anspruch 1 oder 2, **dadurch gekennzeichnet, daß** die Konzentration der Lösung von Lithiumverbindungen zwischen 1 und 10 M und vorzugsweise zwischen 3 und 6 M liegt.

4. Verfahren nach einem der Ansprüche 1 bis 3, **dadurch gekennzeichnet, daß** der Kaliumaustauschgrad des Zeoliths vor dem Lithiumaustausch kleiner gleich 15% aller austauschbaren Zentren und vorteilhafterweise kleiner gleich 10% ist.

5. Verfahren nach einem der Ansprüche 1 bis 4, **dadurch gekennzeichnet, daß** man vor dem Lithiumaustausch die austauschbaren Kationen des Edukt-Zeoliths vor und/oder nach der Agglomeration des Zeoliths zum weitaus größten Teil oder sogar vollständig in eine einzige einwertige kationische Spezies, vorzugsweise die Natrium- oder Ammoniumform, umwandelt.

6. Verfahren nach einem der Ansprüche 1 bis 5, **dadurch gekennzeichnet, daß** man den LiCl-Teilstrom durch Kristallisation reinigt.

7. Verfahren nach einem der Ansprüche 1 bis 6, **dadurch gekennzeichnet, daß** man den NaCl, KCl und LiCl-Spuren enthaltenden Endaustragsstrom zum letzten Behälter des Karussels zurückführt.

8. Verfahren nach einem der Ansprüche 1 bis 7, bei dem der Edukt-Zeolith auf drei Festbetten verteilt wird, **dadurch gekennzeichnet, daß** man beim ersten Anfahren das Säulensystem durch Perkolieren einer Lösung von Lithiumchlorid (1) durch die mit dem Edukt-Zeolith gefüllten Säulen des Karussels auf einen Li-Austauschgrad bringt und vorzugsweise
- entweder an erster und zweiter Stelle der Austauschlinie 2 vorausgetauschte Säulen vom Ende der vorhergehenden Kampagne anbringt, wobei man die hintere Position durch eine Säule mit frischen Kügelchen besetzt,
- oder mit 3 Säulen mit frischem Sieb anfährt, aber einen Teil der reinen LiCl-Lösung durch eine recyclierte Li-Lösung vom Ende der vorhergehenden Kampagne ersetzt.

9. Verfahren nach Anspruch 8, **dadurch gekennzeichnet, daß** man am Ende des Zyklus
- entweder das Waschen über die Linie aus 3 Säulen fortführt (unter Rückgewinnung der Li-Lösung zwecks Rückführung zu frischen Kügelchen zu Beginn der folgenden Kampagne) und 2 Chargen vorausgetauschter Kügelchen, die zum Beginnen des Anfahrens der nächsten Kampagne dienen, trocknet
- oder den Austausch über die Linie aus 3 Säulen so fortführt, daß für die Kügelchen in den letzten Säulen des Karussels ein Li-Austauschgrad von 96% erzielt wird, wobei die anfallenden Li-reichen Lösungen (5) zurückgewonnen und vorteilhafterweise als Lösung für das erste Anfahren verwendet werden.
